Europäisches Patentamt

European Patent Office

Office européen des brevets

(19)

(11) Publication number: 0 324 582

A2

# (12) EUROPEAN PATENT APPLICATION

(21) Application number: 89300187.5

(22) Date of filing: 10.01.89

(51) Int. Cl.4: G 01 S 17/10

(30) Priority: 12.01.88 GB 8800584

(43) Date of publication of application:
19.07.89 Bulletin 89/29

(84) Designated Contracting States:
BE DE FR GB IT NL

(71) Applicant: The British Petroleum Company p.l.c.
Britannic House Moor Lane
London EC2Y 9BU (GB)

(72) Inventor: Grant, Andrew Ian
The British Petroleum Company p.l.c. Chertsey Road
Sunbury-on-Thames Middlesex TW16 7LN (GB)

Macpherson, Martyn Taylor
The British Petroleum Company p.l.c. Chertsey Road
Sunbury-on-Thames Middlesex TW16 7LN (GB)

Stevens, David Graham
The British Petroleum Company p.l.c. Chertsey Road
Sunbury-on-Thames Middlesex TW16 7LN (GB)

(74) Representative: MacLeod, Malcolm et al
BP INTERNATIONAL LIMITED Patents Division Chertsey
Road
Sunbury-on-Thames Middlesex TW16 7LN (GB)

(54) Method for timing pulses.

(57) A method for determining the total time of flight distance of a light pulse from a generator on a moving airborne platform to a target at or near ground or sea level involves triggering a pulse of primary light radiation from the generator towards a surface at or near ground or sea level. The beam is sufficiently intense and of such spectral composition that the beam causes the surface to absorb light radiation. The secondary light backscatter or the reflected primary radiation backscatter is detected and the outgoing primary light radiation and the returning secondary radiation or the reflected primary radiation are used to operate triggers on the start and stop inputs of a timer to determine the time of flight of the light pulse from the airborne platform to the target and back again. The total time of flight distances are used to determine the timing of the opening of the shutter or the optical detector gating of the subsequent pulse before the return of that pulse of induced secondary radiation or reflected primary radiation, and, thus, to circumvent the minimum propagation delay in the electronic circuitry.

FIG.1

Description

## METHOD FOR TIMING PULSES

This invention relates to an improved method for determining the effective distance from a light generating and detecting system situated on a moving airborne platform to a target at or near ground or sea level for optical remote sensing and other applications.

This method will be significant for remotely sensed light scattering, laser-induced fluorescence, and differential light absorption measurements from moving platforms.

The detection of induced optical anomalies at, above or below marine surfaces and at or above land surfaces can be of great value in identifying and locating phenomena due to materials such as pollutants, petroleum and other minerals. Incorporating optical equipment on an airborne platform for this task provides a rapid reconnaissance technique.

Minerals may be exposed by weathering to produce anomalous regions or they may become a surface expression of the underlying materials through migration from the subsurface.

A particularly important example of the latter is the natural seepage of hydrocarbons from subterranean reservoirs which may be either on or offshore.

Offshore petroleum exploration technology, especially the use of reflection seismic, has developed to the extent that the structure and thickness of potentially oil-bearing rocks can be determined with a degree of confidence which is limited mostly by cost. However, many areas still have either widely scattered wells or no wells at all, and in such places geochemical information may be insufficient to determine whether petroleum has been generated and its subsequent history.

In such circumstances there is a need for direct information about the occurrence of petroleum in the subsurface. Fortunately, the gas phase of petroleum is buoyant and has the capacity, demonstrated in several mature offshore production provinces, to breach trap seals and rise through the overburden to give flowing gassy seeps in the sea. Bubble plumes caused by gas seepage from oilfields have been reported, for example, from the North Sea, the Gulf of Mexico and offshore Brunei. Some bubbles may contain oil or gas condensate in addition to natural gas and this liquid phase will form a slick on the surface. In rough water the oil may become emulsified in the surface layer.

Detector systems frequently involve the use of pulse gating and this requires accurate altitude determination for detector timing and synchronisation and subsequent correction of detected optical signal returns for altitude variations.

Previous systems proposed rely on radar altimetry to determine height. Radar, however, is insufficiently accurate for this purpose at heights below 1000 ft (305 m) because
(a) it provides only an average value in time and, therefore cannot provide pulse-by-pulse detector-to-target distances as the airborne platform traverses the area to be interrogated and

(b) it cannot take account of attitude changes in the airborne platform which is important if the optical systems have optical paths which are fixed in relation to the air frame.

Timing and synchronisation accuracy for optical detector means employing radar altimetry may be as poor as ±200 nanoseconds, equivalent to an accuracy of the radar altimeter of ±100 ft for the absolute detector to target distance under high pitch and roll conditions.

We have now devised an improved method of detector timing and synchronisation which does not suffer from these defects.

According to the present invention there is provided a method for determining the total time of flight distance of a light pulse from a generator on a moving airborne platform, such as an aeroplane, to a target, which may be topographic at ground or sea level, which method comprises the steps of triggering a pulse of primary light radiation from the generator towards a surface at or near ground or sea level, the beam being sufficiently intense and of such spectral composition that the beam causes the surface to absorb some light radiation, detecting the secondary light emission or the reflected primary radiation backscatter and using the outgoing primary light radiation and the returning secondary radiation or the reflected primary radiation to operate triggers on the start and stop inputs of a timer to determine the time of flight of the light pulse from the airborne platform to the target and back again and using the total time of flight distances to determine the timing synchronisation for the opening of the shutter or the detector gating for the subsequent pulse before the return of that pulse of induced secondary radiation or reflected primary radiation, and thus, to circumvent the minimum propagation delay in the electronic circuitry.

The pulse of primary light radiation is preferably a pulse of laser light, most preferably ultra-violet light, which may be generated by an excimer laser.

Other suitable sources include a metal gas discharge laser, a flash-pumped laser or a semi-conductor pumped solid-state laser. Such lasers may be Nd-YAG lasers, ruby lasers or pulsed argon ion lasers. The pulsed lasers may have nanosecond or picosecond pulse widths. The picosecond pulsed lasers may comprise a source laser, a synchronously pumped, cavity dumped, dye laser with amplifiers and further wavelength shifting units. It is envisaged that regenerative amplification systems with high repetition rate may be included in the picosecond source of laser radiation.

The secondary light backscatter or reflected light backscatter is preferably collected by an optical telescope.

This method permits accurate interrogation of signals emanating from above, below or at the target distance, as required, by synchronising precisely the detector shutter or detector gating over the relevant returning optical signals.

This is performed by the operator adjusting an "apparent" minimum propagation delay to interrogate signals from above or below a reference level, e.g. the surface of the sea, the timing for the relevant returning signal being determined in part from the total time-of-flight measured for the previous pulse, or pulses.

By using the time-of-flight of a light pulse from an airborne platform to the target and back again, the precise altitude or source distance may be established for the purposes of accurate time-domain "box car" detector gating and synchronisation, or similar, and also accurate altitude or source distance for signal normalisation.

The following definitions apply:

(a) $H_{(N)}$ is the distance determined from the time-of-flight of the Nth pulsed emmision from the moving airborne platform to the reference target, e.g. a land or sea surface;

(b) $H_{(N-1)}$ is the time-of-flight distance for the preceding pulse. This timing, which may be the average of several laser pulses is carried forward to determine the synchronisation of the Nth pulse.

(c) MPD - minimum propagation delay - is an inherent delay caused by non-resistive loads in electronic circuitry.

In order for the detector to gate or shutter open over the returning light pulse, the gate trigger must be fired $(H_{(N)} - MPD)$ seconds after the Nth laser pulse leaves the airborne platform, defined by $t_N = zero$.

The invention relies upon $H_{(N-1)}$ being a good measure for $H_{(N)}$. The invention stores the true $H_{(N)}$ for subsequent use in data processing and carries its value forward in turn in the circuitry to determine the timing for $H_{(N+1)}$.

The technique is particularly applicable to the software configurable, high spectral and digital resolution, airborne optical detector system for the detection of radiation over the UV to the red wave band and beyond, disclosed in our copending British patent application no. 8800583 (BP Case No 6874).

This application discloses apparatus for detecting an anomaly at or near a water or land surface which apparatus comprises means for generating a beam, preferably a pulsed beam, of primary light radiation, preferably ultra-violet light, and directing the beam towards the surface, the beam being sufficiently intense and of such a spectral composition that the beam causes the anomaly, if present, to emit secondary light radiation, means for collecting the secondary light radiation or means for collecting solar induced secondary light radiation, spectral analysis means for analysing the spectrum of the emitted secondary radiation, and a high resolution, multi-element digitising detector for receiving the analysed secondary radiation, having a plurality of channels across the spectrum of the emitted secondary radiation, the channels being software configurable and under the control of a digitally addressable computer-operated controller, the concentration of used channels across the plurality of channels being adjustable and increasable in the regions of the spectrum of greatest interest and decreasable in the regions of least interest.

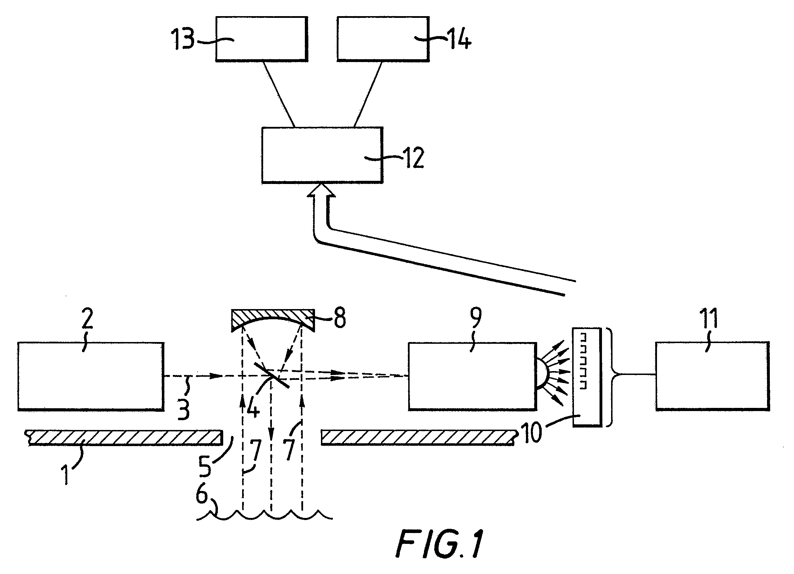

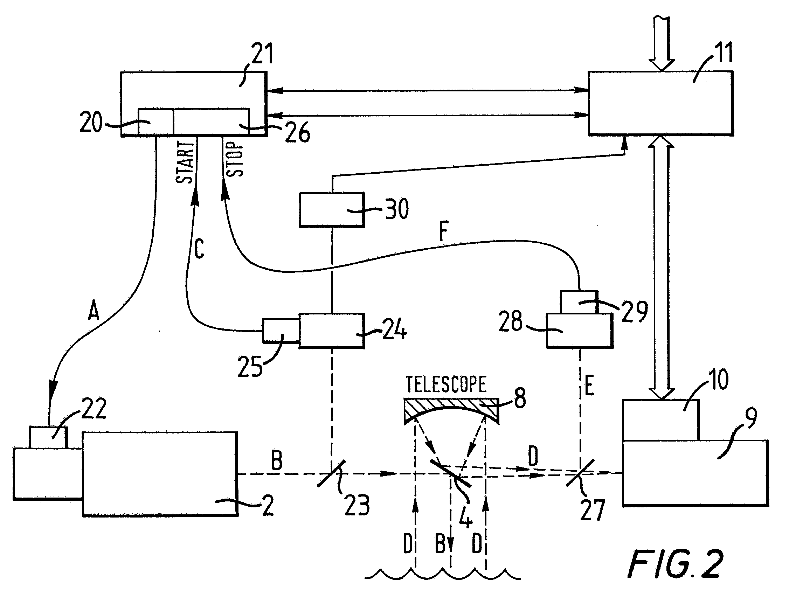

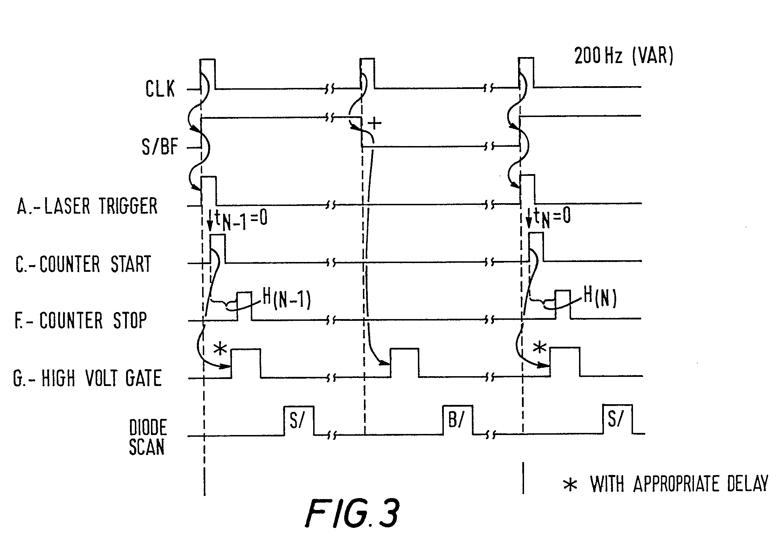

The invention is illustrated by but not limited with reference to Figures 1-3 of the accompanying drawings, wherein Figure 1 is a diagrammatic representation of an airborne laser fluorosensing system, Figure 2 shows the detector of Figure 1 fitted with a pulse timing system according to the present invention and Figure 3 is a timing diagram.

With reference to Figure 1.

The system is fitted within the interior of a light aircraft 1. It comprises an excimer laser 2 emitting a pulsed beam 3 of primary ultra-violet light radiation which is reflected by a mirror 4 through a port 5 in the underside of the aircraft and directed downwardly to the surface of the sea 6.

Rays of secondary light radiation 7 induced by the primary beam are collected by a reflecting telescope 8, further reflected by the mirror 4 and passed through a grating spectrograph 9 which disperses the light onto a gateable optical multi-channel detector 10 which is software configurable and capable of multi-element digitising to 512, 1024 or more channels, although only a selection may be used in practice.

From the detector, signals are passed to a digitally addressable software configurable controller 11 which controls the effective digitisation across the multi-element detector.

Data is logged, displayed and stored by logger 12, display unit 13 and store 14.

With reference to Figure 2.

The timing and synchronisation circuitry, Figure 2, operates in this preferred form of the invention as follows. From an optical trigger unit 20 driven from a master clock in the timing and synchronisation circuitry 21 a trigger pulse A is sent to the laser trigger unit 22 causing the laser 2 to discharge a laser pulse B. Part of this laser light pulse is split off by the beam splitter 23 to fall onto a fast photodiode photodetector 24, and by trigger unit 25, send a trigger pulse C to a fast counter 26. The photodetector 24 also sends an energy reading to the controller 11 through the ADC 30. Synchronous with the laser pulse B, a pulse trigger C is generated. This starts the fast counter 26 based on a clock with sufficient time resolution to discriminate heights with the required accuracy. Counter 26 contains a 200 MegaHertz clock which will provide 5 nanoseconds timing resolution equivalent to an airborne platform to signal source distance determination accuracy of ±2.5 feet. The laser beam B goes on to the sea or land surface by a retroreflector 4 which is part of the receiving optics, containing a telescope 8. The collected radiation D contains excited luminescences from the target and reflected primary radiation. The unchanged reflected primary radiation is split off by a dichroic beamsplitter 27 to form beam E. Beam E may alternatively comprise a portion split off from the returning primary and secondary radiation. Beam E falls onto a fast photodiode photodetector 28, to generate by means of trigger unit 29 a pulse F to stop the counter 26.

Thus between the time of the start trigger C and the time of the stop trigger F, the laser beam has left the airborne platform, hit the target and reflected primary radiation and secondary radiation has returned to the receiving system, and a round trip time for the laser light pulse has been established in counter 26. The speed of light is known, approx. $2.99 \times 10^8$ metres per second, and so an accurate distance between the airborne platform and the signal source, or target, may be established. This value is passed to the controller 11 and subsequently to the data logger 12 for storage and use in data analysis. More importantly this value is also passed to the timing and synchronisation circuiting 21 for the next pulse of primary radiation as shown in Figure 3.

In Figure 3, the laser trigger pulse A is initiated for every other pulse of the master clock CLK, the timing and synchronisation circuitry (21 of Figure 2). Counter Start C is generated with the laser pulse B of Figure 2 but may not be precisely simultaneous with A because of propagation delays in the laser electronics. C determines the time zero for the particular laser pulse e. g. $t_{N-1}^{zero}$ for the (N-1)th laser pulse. The returning primary and secondary radiation, (D of Figure 2,) generates pulse F Counter Stop which halts the timing counter at the time of flight for the (N-1)th laser pulse. The fast counter, 26 of Figure 2, now reads $H_{(N-1)}$ seconds for the (N-1)th pulse which is a measure of the round trip time for that laser pulse. The High Volt Gate G is the detector, (10 of Figure 2,) gate and must be opened before E is propagated.

Therefore, the position in time for the asterisked Nth High Gate Signal of G is determined from the time zero of the Nth laser pulse $t_N^{zero}$; the previous pulses' time of flight, $H_{(N-1)}$ and the MPD of the system.

Thus, the time for triggering the detector gate for the Nth pulse, $t_N^{gate}$ is given by:
$$t_N^{gate} = t_N^{zero} + H_{(N-1)} - MPD.$$

## Claims

1. A method for determining the total time of flight distance of a light pulse from a generator on a moving airborne platform to a target at or near ground or sea level which method comprises the steps of triggering a pulse of primary light radiation from the generator towards a surface at or near ground or sea level, the beam being sufficiently intense and of such spectral composition that the beam causes the surface to absorb light radiation, and detecting the induced secondary light emission or detecting the reflected primary radiation backscatter characterised by the fact that the outgoing primary light radiation and the returning secondary radiation or the reflected primary radiation are used to operate triggers on the start and stop inputs of a timer to determine the time of flight of the light pulse from the airborne platform to the target and back again and the total time of flight distances are used to determine the timing for the opening of the shutter or the detector gating for the subsequent pulse before the return of that pulse of induced secondary radiation or reflected primary radiation.

2. A method according to claim 1 wherein the pulse of primary light radiation is a pulse of laser light.

3. A method according to claim 2 wherein the pulse of laser light is a pulse of ultra-violet light.

4. A method according to claim 3 wherein the pulse of ultra-violet light is generated by an excimer laser.

5. A method according to any of the preceding claims wherein the value of $H(N)$ is stored in a data processing system and its value is carried forward to determine the timing of $H(N+1)$, $H(N)$ and $H(N)+1$ being as hereinbefore defined.

6. A method according to any of the preceding claims wherein the secondary light backscatter or reflected primary light backscatter is detected by an optical telescope.

7. A method according to any of the preceding claims wherein the timer is a digital timer with 200 MegaHertz clock providing 5 nanoseconds timing resolution.

FIG.1

FIG.2

EP 0 324 582 A2

FIG.3

200 Hz (VAR)

CLK

S/BF     +

A.- LASER TRIGGER     $t_{N-1}=0$     $t_N=0$

C.- COUNTER START

F.- COUNTER STOP     H(N-1)     H(N)

G.- HIGH VOLT GATE     *     *

DIODE SCAN     S/     B/     S/

* WITH APPROPRIATE DELAY

EP 0 324 582 A2